(19) Europäisches Patentamt / European Patent Office / Office européen des brevets

(11) **EP 3 707 192 B2**

(12) **NEW EUROPEAN PATENT SPECIFICATION**
After opposition procedure

(45) Date of publication and mention of the opposition decision:
**01.04.2026 Bulletin 2026/14**

(45) Mention of the grant of the patent:
**07.06.2023 Bulletin 2023/23**

(21) Application number: **18796941.5**

(22) Date of filing: **05.11.2018**

(51) International Patent Classification (IPC):
***C08G 65/26*** *(2006.01)* ***C08G 18/24*** *(2006.01)*
***C08G 18/48*** *(2006.01)* ***C08G 18/76*** *(2006.01)*

(52) Cooperative Patent Classification (CPC):
**C08G 65/2663; C08G 18/242; C08G 18/4866; C08G 18/7621; C08G 18/7664; C08G 18/7671; C08G 65/2609;** C08G 2101/00; C08G 2110/0058; C08G 2650/24; C08G 2650/58

(86) International application number:
**PCT/EP2018/080130**

(87) International publication number:
**WO 2019/086655 (09.05.2019 Gazette 2019/19)**

(54) **PROCESS FOR PREPARING A POLYETHER POLYOL WITH A HIGH ETHYLENE OXIDE CONTENT**

VERFAHREN ZUR HERSTELLUNG EINES POLYETHERPOLYOLS MIT HOHEM ETHYLENOXIDGEHALT

PROCÉDÉ DE PRÉPARATION D’UN POLYOL DE POLYÉTHER À TENEUR ÉLEVÉE EN OXYDE D’ÉTHYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.11.2017 IN 201741039435**

(43) Date of publication of application:
**16.09.2020 Bulletin 2020/38**

(73) Proprietor: **Shell Internationale Research Maatschappij B.V.**
**2596 HR The Hague (NL)**

(72) Inventors:
- **TATAKE, Prashant Anil**
  **Bangalore North 562149 Karnataka (IN)**
- **DHANAPAL, Prem Kumar**
  **Bangalore North 562149 Karnataka (IN)**
- **ELEVELD, Michiel Barend**
  **1031 HW Amsterdam (NL)**
- **KARIPEDDI, Rama Tejaswi**
  **Bangalore North 562149 Karnataka (IN)**
- **KUMAR, Arvind**
  **Bangalore North 562149 Karnataka (IN)**

(74) Representative: **Shell Legal Services IP**
**PO Box 384**
**2501 CJ The Hague (NL)**

(56) References cited:
**WO-A1-2016/209677**
**WO-A1-2017/032768**
**US-A1- 2011 230 581**



Processed by Luminess, 75001 PARIS (FR)

## Description

Field of the invention

The present invention relates to a process for preparing a polyether polyol, and to a process for preparing a polyurethane foam using said polyether polyol.

Background of the invention

Polyether polyols are commonly used for the manufacture of polyurethane foams, such as flexible polyurethane foams. Flexible polyurethane foams are widely used in numerous applications. Main sectors of application are automotive and aircraft industry, upholstered furniture and technical articles. For instance, full foam seats, top pads for the seats and restraints for back and head, all made from flexible polyurethane foam, are widely used in cars and aeroplanes. Other applications include the use of flexible polyurethane foam as carpet backings, bedding and mattresses, foamed seat saddles for motorbikes, gaskets between a car body and its lights, lip seals of air filters for engines and insulating layers on car parts and engine parts to reduce sound and vibration.

Polyether polyols are also frequently referred to as polyoxyalkylene polyols. Polyether polyols are typically obtained by reacting a starter compound or initiator having a plurality of active hydrogen atoms with one or more alkylene oxides. Normally, the polyether polyols used in the manufacture of flexible polyurethane foams are obtained by addition of either (i) propylene oxide exclusively or (ii) a mixture of propylene oxide and ethylene oxide having a high propylene oxide content to a starter compound with an appropriate hydroxyl functionality. However, for the production of a number of polyurethane foams, such as soft, hypersoft foams and viscoelastic foams, in particular pneumatic viscoelastic foams, and for cell opening, polyether polyols with a high ethylene oxide content are also employed. US20110230581 discloses a process for preparing polyether polyols with a high ethylene oxide content using a double metal cyanide (DMC) catalyst.

An important characteristic for a polyether polyol is its viscosity, especially its viscosity at a relatively low temperature. The lower the viscosity, the easier the polyether polyol can be handled (stored and transported), especially in countries where the ambient temperature is relatively low. It is especially desired that the polyether polyol does not solidify (is liquid) at a relatively low temperature.

Still further, since polyether polyols are relatively expensive, especially polyether polyols which have a high ethylene oxide (EO) content, it is desired that a relatively low amount of such polyether polyol may be used to make a certain polyurethane foam. Such expensive polyol may then advantageously (partially) be replaced by a cheaper polyether polyol, for example a polyether polyol which has a lower EO content.

It is especially desired to provide such polyether polyol as referred to above, that is suitable to be used in the production of flexible polyurethane foams. It is particularly desired that such polyol may be used in a wide variety of flexible polyurethane foam applications, including soft foams, super soft (hypersoft) foams and viscoelastic foams, in particular pneumatic viscoelastic foams, and for cell opening in molded foams.

An objective of the present invention is to provide a process for preparing a polyether polyol with a high ethylene oxide content, using a composite metal cyanide complex catalyst, and a process for preparing a polyurethane foam from such polyether polyol, which process(es) has (have) one or more of the above-desired improvements.

Summary of the invention

Surprisingly it was found that the above-mentioned objective may be achieved by a process wherein the ethylene oxide concentration in the reactor is below 12,000 parts per million by weight (ppmw) per minute.

Accordingly, the present invention relates to a process for preparing a polyether polyol comprising:

continuously feeding into a reactor which contains a composite metal cyanide complex catalyst and (i) a poly(oxyalkylene) polyol or (ii) a polyether polyol obtainable by the process according to the invention:

(a) ethylene oxide,
(b) a substituted alkylene oxide corresponding to Formula (I)

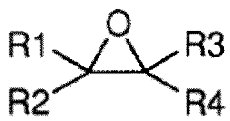

(I)

in which R1, R2, R3 and R4 independently of each other represent hydrogen, a $C_1$-$C_{12}$-alkyl group and/or a

phenyl group, provided that:

(I) at least one of the radicals R1 to R4 does not represent hydrogen and
(II) one or more methylene groups in any $C_1$-$C_{12}$-alkyl radical may be replaced by an oxygen atom or a sulfur atom,

(c) optionally a starter compound having a hydroxyl functionality of from 1 to 8,

wherein the weight ratio of the total amount of ethylene oxide fed to the total amount of the substituted alkylene oxide fed is of from 50:50 to 95:5, and
wherein the ethylene oxide concentration is below 12,000 parts per million by weight (ppmw) per minute during the entire period of continuously feeding ethylene oxide, wherein the ethylene oxide concentration is defined as the weight of ethylene oxide in the reactor based on the total weight of the reactor contents, and said ethylene oxide concentration is a time-averaged concentration, C2, calculated for a time period T, starting at t0 and ending at t1, and C2 is calculated as follows:

C2 expressed in ppmw/minute = C1 / number of minutes in time period T,

wherein

C1 expressed in ppmw = [total weight of ethylene oxide fed during time period T / total weight of the reactor contents at t0] * 1,000,000,

wherein during said time period T, both the ethylene oxide feed rate and the ratio of the ethylene oxide feed rate to the substituted alkylene oxide feed rate are constant, and

wherein the reactor contains said catalyst and said polyol before start of said continuous feed into the reactor and the catalyst is not fed continuously into the reactor.

The present invention also relates to a process for preparing a polyurethane foam comprising: preparing a polyether polyol in accordance with the above-mentioned process, and reacting the polyether polyol and a polyisocyanate in the presence of a blowing agent.

## Detailed description of the invention

While the processes of the present invention and compositions used in said processes are described in terms of "comprising", "containing" or "including" one or more various described steps and components, respectively, they can also "consist essentially of" or "consist of" said one or more various described steps and components, respectively.".

In the above-mentioned polyether polyol preparation process of the present invention, the following compounds are continuously fed into the reactor: (a) ethylene oxide, (b) a substituted alkylene oxide, and (c) optionally a starter compound. In the present process, during continuously feeding ethylene oxide, in particular during continuously feeding ethylene oxide, the substituted alkylene oxide and optionally the starter compound, the ethylene oxide concentration is below 12,000 parts per million by weight (ppmw) per minute, preferably below 11,000 ppmw per minute, more preferably below 10,000 ppmw per minute, more preferably below 9,000 ppmw
per minute, more preferably below 8,500 ppmw per minute, more preferably below 8,000 ppmw per minute, more preferably below 7,500 ppmw per minute, more preferably below 7,000 ppmw per minute, more preferably below 6,500 ppmw per minute, most preferably below 6,000 ppmw per minute.

During the entire period of continuously feeding ethylene oxide, in particular during the entire period of continuously feeding ethylene oxide, the substituted alkylene oxide and optionally the starter compound, the ethylene oxide concentration is below one of the above-mentioned values. In particular, during said continuous feed period, the ethylene oxide concentration does not equal or exceed 12,000 ppmw per minute, preferably it does not equal or exceed 11,000 ppmw per minute, more preferably it does not equal or exceed 9,000 ppmw per minute, more preferably it does not equal or exceed 8,500 ppmw per minute, more preferably it does not equal or exceed 8,000 ppmw per minute, more preferably it does not equal or exceed 7,500 ppmw per minute, more preferably it does not equal or exceed 7,000 ppmw per minute, more preferably it does not equal or exceed 6,5000 ppmw per minute, most preferably it does not equal or exceed 6,000 ppmw per minute.

Within the present specification, the above-mentioned "ethylene oxide concentration" is defined as the weight of ethylene oxide in the reactor based on the total weight of the reactor contents. Further, within the present specification, said ethylene oxide concentration is expressed in units of parts per million by weight per minute (ppmw/minute). Said ethylene oxide concentration is a time-averaged ethylene oxide concentration, C2, wherein the ethylene oxide concentration may be averaged over a time period during continuously feeding ethylene oxide, hereinafter referred to as time period T. During said time period T, both (i) the ethylene oxide feed rate and (ii) the ratio of the ethylene oxide feed rate to the substituted alkylene oxide feed rate are constant.

In particular, said ethylene oxide concentration may be calculated as follows in relation to the above-mentioned time period T starting at t0 and ending at t1. Firstly, a total ethylene oxide concentration over the entire time period T (hereinafter referred to as "C1") is calculated as follows:

C1 (expressed in ppmw) = [(total weight of ethylene oxide fed during time period T)/(total weight of the reactor contents at t0)]*1,000,000

Secondly, the time-averaged ethylene oxide concentration (hereinafter referred to as "C2") is calculated as follows:

C2 (expressed in ppmw/minute) = C1/(number of minutes in time period T)

In the present invention, said (time-averaged) ethylene oxide concentration "C2" should be below 12,000 parts per million by weight (ppmw) per minute, as further described above.

Further, during the above-mentioned continuous feed period, the above-mentioned ethylene oxide concentration may be at least 1,000 ppmw per minute or at least 2,000 ppmw per minute or at least 3,000 ppmw per minute or at least 4,000 ppmw per minute.

Further, in the process of the present invention, the reactor into which ethylene oxide, the substituted alkylene oxide and optionally the starter compound are continuously fed, contains a composite metal cyanide complex catalyst. Further, said reactor contains a polyol which is (i) a poly(oxyalkylene) polyol or (ii) a polyether polyol obtainable by the process according to the present invention. The reactor contains said catalyst and said polyol before start of said continuous feed into the reactor. Preferably, said poly(oxyalkylene) polyol, as mentioned under item (i) above, has a weight ratio of ethylene oxide units to substituted alkylene oxide units (i.e. other than ethylene oxide units) which is in one of the ranges as defined in the present specification for the weight ratio of the total amount of ethylene oxide fed to the total amount of the substituted alkylene oxide fed in the present polyol preparation process.

Preferably, the above-mentioned polyol as contained in the reactor is a polyether polyol obtainable by the process according to the present invention, as mentioned under item (ii) above. In particular, said polyether polyol comprises preformed polyether polyol obtained by the process according to the present invention. Such preformed polyether polyol obtained by the process according to the present invention may be added to the reactor or formed in situ in the reactor, before continuously feeding ethylene oxide, the substituted alkylene oxide and optionally the starter compound. In the latter case, which is preferred, such preformed polyether polyol comprises polyether polyol obtained by the process according to the present invention which remained in the reactor. Such preformed polyether polyol remaining in the reactor is generally referred to as "heel". An easy way of ensuring that heel is present in the reactor is to stop the removal of polyether polyol before the reactor has been fully emptied.

The proportion of the weight of the above-mentioned polyol as contained in the reactor, into which ethylene oxide, the substituted alkylene oxide and optionally the starter compound are continuously fed, on the basis of the total weight of final product in the reactor, may vary within wide ranges. Said proportion may be of from 1 to 80 wt.%, or 3 to 70 wt.%, or 5 to 60 wt.%, or 7 to 50 wt.%, or 8 to 40 wt.%. Said proportion is related to the so-called "build ratio" which in the present specification is defined as the ratio of the total weight of final product in the reactor to the weight of said polyol. That is to say, the proportion of the weight of the (i) poly(oxyalkylene) polyol or (ii) polyether polyol obtainable by the process according to the invention, on the basis of the total weight of final product in the reactor, may be of from 1 to 80 wt.%, or 3 to 70 wt.%, or 5 to 60 wt.%, or 7 to 50 wt.%, or 8 to 40 wt.%.

In the process of the present invention, the ratio of the ethylene oxide feed rate to the substituted alkylene oxide feed rate may be increased during at least a part of the continuous feed, preferably during an initial part of the continuous feed. Within the present specification, said ratio is a molar ratio, unless indicated otherwise.

The above-mentioned increase of the ratio of the ethylene oxide feed rate to the substituted alkylene oxide feed rate may be achieved in several ways as indicated for 4 cases in the table below:

| | ethylene oxide feed rate | substituted alkylene oxide feed rate |
|---|---|---|
| 1 | increase | decrease or constant |
| 2 | increase at higher rate | increase at lower rate |
| 3 | decrease at lower rate | decrease at higher rate |
| 4 | constant | decrease |

The above-mentioned cases 1 and 2 are preferred. That is to say, during the continuous feed of the process of the present invention, the ethylene oxide feed rate may be increased and the substituted alkylene oxide feed rate may either be decreased or remain constant. Alternatively, and more preferably, during the continuous feed of the process of the present invention, both the ethylene oxide feed rate and the substituted alkylene oxide feed rate may be increased, wherein the ethylene oxide feed rate is increased at a higher rate than the substituted alkylene oxide feed rate.

Preferably, at the start of the increase of the ratio of the ethylene oxide feed rate to the substituted alkylene oxide feed rate during the continuous feed of ethylene oxide and the substituted alkylene oxide, said ratio is in the range of from 1.0 to 3.0, more preferably 1.3 to 2.5, most preferably 1.5 to 2.3. Further, preferably, at the end of the increase of the ratio of the ethylene oxide feed rate to the substituted alkylene oxide feed rate during the continuous feed of ethylene oxide and the substituted alkylene oxide, said ratio is in the range of from 4.0 to 6.0, more preferably 4.3 to 5.5, most preferably 4.5 to 5.3.

In the above-mentioned case wherein the ratio of the ethylene oxide feed rate to the substituted alkylene oxide feed rate is increased during at least a part of the continuous feed, it is preferred that the above-mentioned proportion of the weight of the polyol as contained in the reactor, into which ethylene oxide, the substituted alkylene oxide and optionally the starter compound are continuously fed, on the basis of the total weight of final product in the reactor, is relatively low, preferably in the range of from 1 to 50 wt.%, more preferably 2 to 40 wt.%, more preferably 3 to 30 wt.%, more preferably 4 to 25 wt.%, most preferably 5 to 20 wt.%.

Further, in the process of the present invention, the ratio of the ethylene oxide feed rate to the substituted alkylene oxide feed rate may be kept constant during the continuous feed, preferably during the entire period of the continuous feed. This may be achieved in several ways as indicated for 3 cases in the table below, of which the first case is preferred:

| | ethylene oxide feed rate | substituted alkylene oxide feed rate |
|---|---|---|
| 1 | constant | constant |
| 2 | increase at same rate | increase at same rate |
| 3 | decrease at same rate | decrease at same rate |

In the above-mentioned case wherein the ratio of the ethylene oxide feed rate to the substituted alkylene oxide feed rate is kept constant during the continuous feed, it is preferred that the above-mentioned proportion of the weight of the polyol as contained in the reactor, into which ethylene oxide, the substituted alkylene oxide and optionally the starter compound are continuously fed, on the basis of the total weight of final product in the reactor, is relatively high, preferably in the range of from greater than 50 to 80 wt.%, more preferably greater than 50 to 70 wt.%, most preferably greater than 50 to 60 wt.%.

In the process of the present invention, ethylene oxide, the substituted alkylene oxide and optionally the starter compound are continuously fed into a reactor which contains a composite metal cyanide complex catalyst. At least part of the catalyst may be fed to the reactor before start of said continuous feed into the reactor. Further, at least part of the catalyst may be contained in the (i) poly(oxyalkylene) polyol or (ii) polyether polyol obtainable by the process according to the invention, which polyol is contained in the reactor into which ethylene oxide, the substituted alkylene oxide and optionally the starter compound are continuously fed.

The composite metal cyanide complex catalyst is not fed continuously into the reactor.

In the present invention, the polyether polyol is a polyether polyol prepared by ring-opening polymerization of an alkylene oxide (ethylene oxide and the substituted alkylene oxide) in the presence of a composite metal cyanide complex catalyst. Preferably, in such case, the composite metal cyanide complex catalyst is not removed after preparing the polyether polyol. Composite metal cyanide complex catalysts are frequently also referred to as double metal cyanide (DMC) catalysts. The amount of the composite metal cyanide complex catalyst may be of from 5 to 100 parts per million by weight (ppmw), preferably 10 to 40 ppmw, based on the final polyether polyol.

In the present invention, the composite metal cyanide complex catalyst may be of the following formula (1):

(1) $M^1_a[M^2_b(CN)_c]_d.e(M^1_fX_g).h(H_2O).i(R)$

wherein each of $M^1$ and $M^2$ is a metal, X is a halogen atom, R is an organic ligand, and each of a, b, c, d, e, f, g, h and i is a number which is variable depending upon the atomic balances of the metals, the number of organic ligands to be coordinated, etc.

In the above formula (1), $M^1$ is preferably a metal selected from Zn(II), Fe(II), Fe(III), Co(II), Ni(II), Mo(IV), Mo(VI), Al(III), V(V), Sr(II), W(IV), W(VI), Mn(II), Cr(III), Cu(II), Sn(II) and Pb(II), particularly preferably Zn(II) or Fe(II). In the above formula, $M^2$ is preferably a metal selected from Fe(II), Fe(III), Co(II), Co(III), Cr(II), Cr(III), Mn(II), Mn(III), Ni(II), V(IV) and V(V), particularly preferably Co(III) or Fe(III). II, III, IV and V between the above brackets represent the atomic valences.

In the above formula (1), R is an organic ligand and is preferably at least one compound selected from the group consisting of an alcohol, an ether, a ketone, an ester, an amine and an amide. As such an organic ligand, a watersoluble one may be used. Specifically, one or more compounds selected from tert-butyl alcohol, n-butyl alcohol, iso-butyl alcohol, tert-pentyl alcohol, isopentyl alcohol, N,N-dimethyl acetamide, glyme (ethylene glycol dimethyl ether), diglyme (diethylene glycol dimethyl ether), triglyme (triethylene glycol dimethyl ether), ethylene glycol mono-tert-butylether, iso-propyl alcohol and dioxane, may be used as organic ligand(s). The dioxane may be 1,4-dioxane or 1,3-dioxane and is preferably 1,4-dioxane. Most preferably, the organic ligand or one of the organic ligands in the composite metal cyanide complex catalyst is tert-butyl alcohol. Further, as an alcohol organic ligand, a polyol, preferably a polyether polyol may be used. More preferably, a poly(propylene glycol) having a molecular weight in the range of from 500 to 2,500 Dalton, preferably 800 to 2,200 Dalton, may be used as the organic ligand or one of the organic ligands. Most preferably, such poly(propylene glycol) is used in combination with tert-butyl alcohol as organic ligands.

The composite metal cyanide complex catalyst can be produced by known production methods. For example, it can be produced by a method wherein an organic ligand is coordinated to a reaction product obtained by reacting a metal halide with an alkali metal cyano metalate in an aqueous solution, then the solid component is separated, and the separated solid component is washed with an aqueous solution containing organic ligand. An alternative method is one wherein a metal halide is reacted with an alkali metal cyano metalate in an aqueous solution containing organic ligand, and the obtained reaction product (solid component) is separated, and the separated solid component is washed with an aqueous solution containing organic ligand.

As the metal for the metal halide, one exemplified above as $M^1$ may be used, and Zn(II) or Fe(II) is particularly preferred. The most preferred metal halide is $ZnCl_2$. As the metal constituting the cyano metalate, one exemplified above as $M_2$ may be used, and Co(III) or Fe(III) is particularly preferred. A preferred specific example of the alkali metal cyano metalate is $Na_3[Co(CN)_6]$ or $K_3[Co(CN)_6]$. Further, instead of an alkali metal cyano metalate, $H_3[Co(CN)_6]$ may also be used.

Further, the reaction product obtained by the above method may be washed and then subjected to filtration, and the cake (solid component) thereby obtained may be dried to prepare a composite metal cyanide complex catalyst in a powder form. Alternatively, the aqueous solution containing organic ligand and the composite metal cyanide complex catalyst after washing the reaction product, may be dispersed in a polyol, and then, an excess amount of water and the organic ligand may be distilled off to prepare a composite metal cyanide complex catalyst in a slurry form.

As such disperging polyol, a polyether polyol may be used. The polyether polyol is preferably a polyether polyol having of from 2 to 12 hydroxyl groups and a molecular weight of from 300 to 5,000 Dalton which is obtainable by ring-opening polymerization of an alkylene oxide with a polyhydric alcohol such as ethylene glycol, propylene glycol, diethylene glycol, dipropylene glycol, trimethylol propane or glycerol in the presence of an alkali catalyst or a cationic catalyst. Such a polyether polyol may also be used as an initiator at the time of subsequently producing a polyether polyol using the composite metal cyanide complex catalyst in slurry form.

The number of hydroxyl groups in such disperging polyol is preferably of from 2 to 8, particularly preferably 2 to 3. Most preferably, said disperging polyol is a poly(propylene glycol) having a molecular weight of from 300 to 1,500 Dalton.

In the process of the present invention, the following alkylene oxides are continuously fed into the reactor:

(a) ethylene oxide,
(b) a substituted alkylene oxide corresponding to Formula (I)

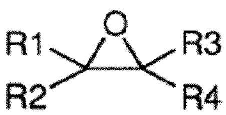

(I)

in which R1, R2, R3 and R4 independently of each other represent hydrogen, a $C_1$-$C_{12}$-alkyl group and/or a phenyl group, provided that:

(I) at least one of the radicals R1 to R4 does not represent hydrogen and

(II) one or more methylene groups in any $C_1$-$C_{12}$-alkyl radical may be replaced by an oxygen atom or a sulfur atom.

Preferably, the above-mentioned substituted alkylene oxide is selected from the group consisting of propylene oxide, 1,2-butylene oxide, 2,3-butylene oxide and styrene oxide. Most preferably, the substituted alkylene oxide is propylene oxide.

During at least part of the continuous feed in the process of the present invention, ethylene oxide and the substituted alkylene oxide are simultaneously fed into the reactor. Therefore, the resulting polyether polyol contains an epoxide mixed block comprising randomly distributed ethylene oxide units and substituted alkylene oxide units. It is preferred that in such epoxide mixed block, the weight ratio of ethylene oxide units to substituted alkylene oxide units is of from 50:50 to 95:5, preferably of from 55:45 to 90:10, more preferably of from 60:40 to 85:15, most preferably of from 70:30 to 80:20. In case in the process of the present invention, the ratio of the ethylene oxide feed rate to the substituted alkylene oxide feed rate is increased (over time) during the continuous feed, more ethylene oxide units than substituted alkylene oxide units are present towards the chain end in the polyether polyol. Further, for the same reason, there are relatively more primary hydroxyl end groups. Only in case an ethylene oxide unit is the hydroxyl end group, this concerns a primary hydroxyl end group.

In the process of the present invention, the weight ratio of the total amount of ethylene oxide fed to the total amount of the substituted alkylene oxide fed is of from 50:50 to 95:5, preferably of from 55:45 to 90:10, more preferably of from 60:40 to 85:15, most preferably of from 70:30 to 80:20. Said total amount of ethylene oxide fed comprises the amount of all ethylene oxide fed continuously or not continuously, separately or not separately. Further, said total amount of the substituted alkylene oxide fed comprises the amount of all substituted alkylene oxide fed continuously or not continuously, separately or not separately.

It is envisaged that in the process of the present invention, in a step preceding the continuous feed of ethylene oxide and the substituted alkylene oxide resulting in the above-mentioned epoxide mixed block, only ethylene oxide or substituted alkylene oxide, preferably only substituted alkylene oxide, is fed, resulting in a block consisting of said one type of alkylene oxide. Further, it is envisaged that in the process of the present invention, in a step following the continuous feed of ethylene oxide and the substituted alkylene oxide resulting in the above-mentioned epoxide mixed block, only ethylene oxide or substituted alkylene oxide, preferably only ethylene oxide, is fed, resulting in a block consisting of said one type of alkylene oxide.

Optionally, in the process of the present invention, a starter compound having a hydroxyl functionality of from 1 to 8, suitably of from 2 to 8, more suitably of from 2 to 6, more suitably of from 2 to 4, most suitably of from 2 to 3, is continuously fed into the reactor. By said "hydroxyl functionality" reference is made to the number of hydroxyl groups per starter compound.

Preferably, in case a starter compound is continuously fed, the feed rate of such starter compound is increased (over time) during at least a part of the continuous feed. Further, it is preferred that during at least part of the continuous feed in the process of the present invention, ethylene oxide, the substituted alkylene oxide and the starter compound are simultaneously fed into the reactor.

As the above-mentioned starter compound, a polyhydric alcohol, preferably having a molecular weight of at most 400, such as ethylene glycol, propylene glycol, diethylene glycol, dipropylene glycol, trimethylol propane or glycerol, or a polyether monool or polyether polyol having of from 2 to 8 hydroxyl groups and a molecular weight of from 300 to 5,000 Dalton, which is obtainable by ring-opening polymerization of an alkylene oxide with the above-mentioned polyhydric alcohol in the presence of an alkali catalyst or a cationic catalyst, may be used. The number of hydroxyl groups in the above-mentioned polyhydric alcohol is preferably of from 2 to 8, particularly preferably from 2 to 3. More preferably, propylene glycol (MPG), ethylene glycol (MEG), diethylene glycol (DEG), glycerol or a combination thereof is used. Most preferably, propylene glycol (MPG), glycerol or a combination of both is used.

The present polyol preparation process may be carried out at a temperature of from 50 to 200 °C, preferably of from 80 to 180 °C, most preferably of from 100 to 160° C.

The polyether polyol of the present invention may have a hydroxyl value (OH number) of from 15 to 300 mg KOH/g, more suitably of from 15 to 250 mg KOH/g, more suitably of from 15 to 200 mg KOH/g, more suitably of from 15 to 150 mg KOH/g, more suitably of from 20 to 100 mg KOH/g, more suitably of from 20 to 75 mg KOH/g, most suitably of from 25 to 60 mg of KOH/g.

Further, the polyether polyol of the present invention may have a hydroxyl functionality which is the same as the hydroxyl functionality as described above for the starter compound. Therefore, the above description of this property equally applies to the polyether polyol of the present invention.

Further, the polyether polyol of the present invention may have a molecular weight in the range of from 350 to 15,000 Dalton, more suitably of from 500 to 6,500 Dalton, more suitably of from 1,500 to 6,000 Dalton, most suitably of from 2,500 to 5,500 Dalton.

Further, the polyether polyol of the present invention may have a primary hydroxyl content in the range of from 50 to 90%, more suitably of from 50 to 85%, more suitably of from 55 to 80%, most suitably of from 60 to 75%. By said "primary

hydroxyl content" reference is made to the percentage of ethylene oxide (EO) end groups over the total of end groups.

It is preferred that the polyol as contained in the reactor, into which ethylene oxide, the substituted alkylene oxide and optionally the starter compound are continuously fed in accordance with the polyol preparation process of the present invention, has properties similar to those as described above for the polyether polyol of the present invention. Such properties include hydroxyl value, hydroxyl functionality, molecular weight and primary hydroxyl content. Therefore, the above description of these properties equally applies to said polyol as contained in the reactor.

The present invention also relates to a process for preparing a polyurethane foam comprising:
preparing a polyether polyol comprising:

continuously feeding into a reactor which contains a composite metal cyanide complex catalyst and (i) a poly(oxyalkylene) polyol or (ii) a polyether polyol obtainable by the process according to the invention:

(a) ethylene oxide,
(b) a substituted alkylene oxide corresponding to Formula (I)

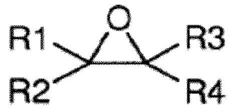
(I)

in which R1, R2, R3 and R4 independently of each other represent hydrogen, a $C_1$-$C_{12}$-alkyl group and/or a phenyl group, provided that:

(I) at least one of the radicals R1 to R4 does not represent hydrogen and
(II) one or more methylene groups in any $C_1$-$C_{12}$-alkyl radical may be replaced by an oxygen atom or a sulfur atom,

(c) optionally a starter compound having a hydroxyl functionality of from 1 to 8,

wherein the weight ratio of the total amount of ethylene oxide fed to the total amount of the substituted alkylene oxide fed is of from 50:50 to 95:5, and
wherein the ethylene oxide concentration is below 12,000 parts per million by weight (ppmw) per minute during the entire period of continuously feeding ethylene oxide, wherein the ethylene oxide concentration is defined as the weight of ethylene
oxide in the reactor based on the total weight of the reactor contents, and said ethylene oxide concentration is a time-averaged concentration, C2, calculated for a time period T, starting at t0 and ending at t1, and C2 is calculated as follows:

C2 expressed in ppmw/minute = C1 / number of minutes in time period T,

wherein

C1 expressed in ppmw = [total weight of ethylene oxide fed during time period T / total weight of the reactor contents at t0] * 1,000,000,

wherein during said time period T, both the ethylene oxide feed rate and the ratio of the ethylene oxide feed rate to the substituted alkylene oxide feed rate are constant, and
wherein the reactor contains said catalyst and said polyol before start of said continuous feed into the reactor and the catalyst is not fed continuously into the reactor,
and additionally comprising:
reacting the polyether polyol and a polyisocyanate in the presence of a blowing agent.

In the above-mentioned polyurethane foam preparation process of the present invention, the first step of preparing the polyether polyol corresponds with the above-described polyether polyol preparation process of the present invention. Therefore, the above description of the latter process equally applies to the first step of said polyurethane foam preparation process.

Preferably, the polyurethane foam to be prepared in the present process is a flexible polyurethane foam. Polyether polyols, which are suitable for preparing flexible polyurethane foams therefrom (also referred to as flexible polyether polyols), have a relatively high molecular weight (for example 3,000 to 6,500 Dalton) and a relatively low nominal functionality (Fn; for example 2 to 3 hydroxyl groups per molecule). Reference is made to "Chemistry and Technology of Polyols for Polyurethanes", Rapra Technology Ltd., 2005, especially page 8.

In the present polyurethane foam preparation process, the polyether polyol is reacted with a polyisocyanate in the presence of a blowing agent.

The polyisocyanate may for example be an aromatic polyisocyanate such as tolylene diisocyanate (TDI), methylene diphenyl diisocyanate (MDI) or polymeric MDI (i.e. polymethylene polyphenyl isocyanate), an aliphatic polyisocyanate such as hexamethylene diisocyanate, xylylene diisocyanate, dicyclohexylmethane diisocyanate, lysine diisocyanate or tetramethylxylylene diisocyanate, an alicyclic polyisocyanate such as isophorone diisocyanate, or a modified product thereof. The tolylene diisocyanate (TDI) may be a mixture of 80 wt.% of 2,4-TDI and 20 wt.% of 2,6-TDI, which mixture is sold as "TDI-80". Further, the polyisocyanate may be any mixture of two or more of the polyisocyanates mentioned above. For example, the polyisocyanate may be a mixture of TDI and MDI, in particular a mixture wherein the weight ratio of TDI:MDI varies from 10:90 to 90:10.

In the present polyurethane foam preparation process, the molar ratio of isocyanate (NCO) groups in the polyisocyanate to hydroxyl (OH) groups in the polyether polyol may be such that the final polyurethane foam contains no free terminal NCO groups. Generally, in the present process, the isocyanate index (or NCO index) may vary within wide ranges and may be of from 60 to 150, suitably of from 65 to 130. The isocyanate index is defined as:
[(actual amount of isocyanate)/(theoretical amount of isocyanate)]*100, wherein the "theoretical amount of isocyanate" equals 1 equivalent isocyanate (NCO) group per 1 equivalent isocyanate-reactive group.

Such "isocyanate-reactive groups" as referred to above include for example OH groups from the polyol and from any water that may be used as a blowing agent. Isocyanate groups also react with water, as further discussed below.

The type of blowing agent, needed to prepare the polyurethane foam of the present invention, is not essential. For example, suitable blowing agents include water, acetone, gaseous or liquid carbon dioxide, halogenated hydrocarbons, aliphatic alkanes and alicyclic alkanes. Due to the ozone depleting effect of the fully chlorinated, fluorinated alkanes (CFC's) the use of this type of blowing agents is generally not preferred, although it is possible to use them within the scope of the present invention. The halogenated alkanes, wherein at least one hydrogen atom has not been substituted by a halogen atom (the so-called HCFC's) have no or hardly any ozone depleting effect and therefore are the preferred halogenated hydrocarbons to be used in physically blown foams. A very suitable HCFC type blowing agent is 1-chloro-1,1-difluoroethane. The use of water as a (chemical) blowing agent is also well known. Water reacts with isocyanate groups according to the well known $NCO/H_2O$ reaction, thereby releasing carbon dioxide which causes the blowing to occur. The aliphatic and alicyclic alkanes, finally, were developed as alternative blowing agents for the CFC's. Examples of such alkanes are n-pentane and n-hexane (aliphatic) and cyclopentane and cyclohexane (alicyclic). It will be understood that the above blowing agents may be used singly or in mixtures of two or more. The amounts wherein the blowing agents are to be used are those conventionally applied, i.e. between 0.1 and 10 php, preferably 0.1 and 5 php, in case of water and between about 0.1 and 20 php in case of halogenated hydrocarbons, aliphatic alkanes and alicyclic alkanes.

Additionally, other components may also be present during the polyurethane preparation process of the present invention, such as one or more polyurethane catalysts, surfactants and/or cross-linking agents.

Polyurethane catalysts are known in the art and include many different compounds. For the purpose of the present invention, suitable catalysts include tin-, lead- or titanium-based catalysts, preferably tin-based catalysts, such as tin salts and dialkyl tin salts of carboxylic acids. Specific examples are stannous octoate, stannous oleate, dibutyltin dilaureate, dibutyltin acetate and dibutyltin diacetate. Other suitable catalysts are tertiary amines, such as, for instance, bis(2,2'-dimethylamino)ethyl ether, trimethylamine, triethylamine, triethylenediamine and dimethylethanolamine (DMEA). Examples of commercially available tertiary amine catalysts are those sold under the tradenames NIAX, TEGOAMIN and DABCO (all trademarks). The catalyst is typically used in an amount of from 0.01 to 2.0 parts by weight per hundred parts by weight of polyether polyol (php). Preferred amounts of catalyst are from 0.05 to 1.0 php.

The use of foam stabilisers (surfactants) is well known. Organosilicone surfactants are most conventionally applied as foam stabilisers in polyurethane production. A large variety of such organosilicone surfactants is commercially available. Usually, such foam stabiliser is used in an amount of up to 5% by weight based on the reaction mixture of polyol reactant and polyisocyanate reactant.

The use of cross-linking agents in the production of polyurethane foams is also well known. Polyfunctional glycol amines are known to be useful for this purpose. The polyfunctional glycol amine which is most frequently used and is also useful in the preparation of the present flexible polyurethane foams, is diethanol amine, often abbreviated as DEOA. If used at all, the cross-linking agent is applied in amounts up to 3.0 php, but amounts in the range of from 0.2 to 1.5 php are most suitably applied.

In addition, other well known auxiliaries, such as colorants, flame retardants and fillers, may also be used during the polyurethane preparation process of the present invention.

The invention is further illustrated by the following Examples.

Examples

In the Examples, polyether polyols (also referred to as "polyols") were prepared using a double metal cyanide (DMC) catalyst. The DMC catalyst contained zinc(II)-hexacyanocobaltate(III), tert-butylalcohol and polypropylene glycol (PPG). Said PPG had a molecular weight of about 1,000 Dalton. The DMC catalyst was prepared in accordance with Example 6 of WO200180994.

In Examples 1 and 2 below, Polyol B and Polyol C, respectively, were prepared in accordance with the present invention. In the preparation of Polyol B, no glycerol (a starter compound) was used. In the preparation of Polyol C, glycerol was used.

A) Example 1: Polyol B

Polyol B was prepared in the presence of Polyol A. Polyol A had a hydroxyl functionality of 3.0 and an OH number of 250 mg of KOH/g, and was prepared by addition of propylene oxide to glycerol.

393.6 g of Polyol A and 0.243 g of the above-mentioned DMC catalyst in 63.2 g of polypropylene glycol, having a molecular weight of 400 g/mol, were introduced into a 5.5 1 laboratory autoclave under a nitrogen atmosphere. The autoclave was closed and its contents were stripped at 130 °C over a period of 1 h, at a stirrer speed of 300 rpm and at a pressure of 800 mbar, while passing through 50 ml of nitrogen per minute. Once the reaction temperature was stabilized at 130 °C, the stirrer speed was increased to about 1000 rpm. Then 22.62 g of propylene oxide (PO) was introduced to activate the catalyst. The start of the polymerization reaction manifested itself by an accelerated drop in pressure 5 minutes after the propylene oxide was introduced. Once the pressure was stabilized, the reactor pressure was increased to about 1.9 bar using nitrogen.

Then a propylene oxide (PO) flow into the reactor was started at a feed rate of 107 g/h. Two minutes after start of the PO flow, an ethylene oxide (EO) flow was started at a feed rate of 150 g/h. Both the PO feed rate and the EO feed rate were increased incrementally during an initial part of the continuous feed. The EO feed rate was increased more than the PO feed rate, such that the ratio of the EO feed rate to the PO feed rate was increased incrementally during an initial part of the continuous feed. The EO flow was stopped after 223 minutes after start of the PO flow. The PO flow was stopped after 232 minutes after start of the PO flow.

The EO and PO feed rates, the molar ratio of the EO feed rate to the PO feed rate and the EO concentration over time are shown in Table 1 below. The EO and PO feed rates were kept constant between the consecutive points in time shown in Table 1.

Table 1

| Time(1) (min) | PO feed rate (g/h) | EO feed rate (g/h) | Molar ratio EO feed rate to PO feed rate | EO concentration(2) (ppmw/min) |
|---|---|---|---|---|
| 0 | 107 | 0 | 0 | 0 |
| 2 | 107 | 150 | 1.8 | 0 |
| 10 | 107 | 175 | 2.2 | 5174 |
| 20 | 107 | 225 | 2.8 | 5636 |
| 30 | 107 | 250 | 3.1 | 6643 |
| 40 | 107 | 275 | 3.4 | 6722 |
| 50 | 112 | 300 | 3.5 | 6747 |
| 60 | 112 | 350 | 4.1 | 6730 |
| 70 | 112 | 400 | 4.7 | 7187 |
| 80 | 150 | 450 | 4.0 | 7502 |
| 90 | 150 | 500 | 4.4 | 7700 |
| 100 | 158 | 550 | 4.6 | 7759 |
| 110 | 170 | 600 | 4.7 | 7753 |
| 120 | 185 | 650 | 4.6 | 7690 |

(continued)

| Time(1) (min) | PO feed rate (g/h) | EO feed rate (g/h) | Molar ratio EO feed rate to PO feed rate | EO concentration(2) (ppmw/min) |
|---|---|---|---|---|
| 130 | 200 | 700 | 4.6 | 7583 |
| 140 | 215 | 750 | 4.6 | 7441 |
| 150 | 230 | 775 | 4.4 | 7277 |
| 160 | 240 | 800 | 4.4 | 6875 |
| 190 | 245 | 800 | 4.3 | 6516 |
| 200 | 245 | 825 | 4.4 | 5196 |
| 210 | 245 | 850 | 4.6 | 5018 |
| 223 | 245 | 0 | 0 | 4854 |
| 232 | 0 | 0 | 0 | 0 |

(1) Counting from start of PO flow.
(2) The EO concentration is defined and calculated as described above in the section preceding the Examples: C1 (expressed in ppmw) = [(total weight of ethylene oxide fed during time period T between two consecutive points in time shown in Table 1)/(total weight of the reactor contents at the start of time period T)]*1,000,000;
EO concentration (expressed in ppmw/minute) = C1/(number of minutes in time period T);

during each of the consecutive time periods T shown in Table 1, both (i) the EO feed rate and (ii) the ratio of the EO feed rate to the PO feed rate were constant.

As can be seen from Table 1, during the entire period of continuously feeding ethylene oxide into the reactor, the ethylene oxide concentration was below 8,000 parts per million by weight (ppmw) per minute.

A total amount of 2033.3 g of ethylene oxide and 679.7 g of propylene oxide was added into the reactor during the continuous feed phase of this experiment. Thus, the weight ratio of the total amount of ethylene oxide fed to the total amount of propylene oxide fed during said continuous feed phase was 75:25.

After a post-reaction time of 0.75 h, the mixture was cooled to 110 °C and stripped with nitrogen in vacuum at a pressure of 800 mbara for 0.5 h and thereafter cooled to 60 °C.

Polyol B had a hydroxyl functionality of 2.8, an OH number of 39.0 mg of KOH/g and a viscosity at 25 °C of 902 mPas. At 5 °C, Polyol B was still liquid and had a viscosity of 3700 mPas. Polyol B was transparant at 25 °C, and became hazy at 5 °C. Further, the weight ratio of ethylene oxide to propylene oxide in Polyol B was 74:26. And its build ratio (ratio of weight of final product to weight of Polyol A) was 8.1. This corresponds to a proportion for Polyol A, based on the weight of the final product, of 12.3 wt.%. The molecular weight of Polyol B was 4,363 g/mol. The amount of the DMC catalyst in the final polyol was 75 ppmw.

B) Example 2: Polyol C

Polyol C was prepared in the same way as Polyol B (in Example 1), with the proviso that:

1) 407.5 g of Polyol B was used. Said Polyol B amount was a residual amount of Polyol B that remained in the reactor ("heel") after the experiment of Example 1 was finalized.

2) 0.225 g of the DMC catalyst in 51.5 g of the polypropylene glycol was used.

3) 23.13 g of propylene oxide (PO) was introduced to activate the catalyst.

4) Two minutes after start of the PO flow, a glycerol flow was started at a feed rate of 9.1 g/h.

5) Four minutes after start of the PO flow, the ethylene oxide (EO) flow was started. During the continuous feed phase, the ratio of the EO feed rate to the PO feed rate was increased in a similar way as in Example 1. The EO flow was stopped after 245 minutes after start of the PO flow. The PO flow was stopped after 253 minutes after start of the PO flow. See further Table 2 below. As can be seen from Table 2, during the entire period of continuously feeding ethylene oxide into the reactor, the ethylene oxide concentration was below 6,500 parts per million by weight (ppmw) per minute.

6) The glycerol feed rate was increased incrementally with 0.22 g/h every 10 minutes until a maximum feed rate of 19 g/h was reached at 218 minutes after starting the glycerol flow, after which the glycerol feed rate was kept constant. A total amount of 43.0 g of glycerol was added over a period of 3.72 h.

7) A total amount of 1873.3 g of ethylene oxide and 615.9 g of propylene oxide was added into the reactor during the continuous feed phase of this experiment. Thus, the weight ratio of the total amount of ethylene oxide fed to the total amount of propylene oxide fed during said continuous feed phase was 75:25.

8) After a post-reaction time of 0.52 h, the mixture was cooled to 110 °C and stripped with nitrogen in vacuum at a pressure of 800 mbara for 1 h and thereafter cooled to 60 °C.

9) Polyol C had a hydroxyl functionality of 2.8, an OH number of 36.4 mg of KOH/g and a viscosity at 25 °C of 1217 mPas. At 5 °C, Polyol C was still liquid and had a viscosity of 5400 mPas. Polyol C was transparant at 25 °C, and became hazy at 5 °C. Further, the weight ratio of ethylene oxide to propylene oxide in Polyol C was 75:25. And its build ratio (ratio of weight of final product to weight of Polyol B) was 7.4. This corresponds to a proportion for Polyol B, based on the weight of the final product, of 13.5 wt.%. The molecular weight of Polyol C was 4,363 g/mol. The amount of the DMC catalyst in the final polyol was 75 ppmw.

Table 2

| Time(1) (min) | PO feed rate (g/h) | EO feed rate (g/h) | Molar ratio EO feed rate to PO feed rate | EO concentration(2) (ppmw/min) |
|---|---|---|---|---|
| 0 | 107 | 0 | 0 | 0 |
| 4 | 107 | 150 | 1.8 | 0 |
| 10 | 107 | 175 | 2.2 | 4853 |
| 20 | 107 | 200 | 2.5 | 5188 |
| 30 | 107 | 225 | 2.8 | 5435 |
| 40 | 107 | 250 | 3.1 | 5608 |
| 50 | 112 | 275 | 3.2 | 5722 |
| 60 | 112 | 300 | 3.5 | 5782 |
| 80 | 112 | 325 | 3.8 | 5376 |
| 90 | 112 | 350 | 4.1 | 5401 |
| 100 | 112 | 375 | 4.4 | 5402 |
| 110 | 112 | 400 | 4.7 | 5383 |
| 120 | 117 | 425 | 4.8 | 5349 |
| 130 | 124 | 450 | 4.8 | 5299 |
| 140 | 131 | 475 | 4.8 | 5236 |
| 150 | 138 | 500 | 4.8 | 5163 |
| 160 | 152 | 550 | 4.8 | 5082 |
| 170 | 165 | 600 | 4.8 | 5218 |
| 180 | 179 | 650 | 4.8 | 5307 |
| 190 | 193 | 700 | 4.8 | 5357 |
| 200 | 205 | 750 | 4.8 | 5373 |
| 210 | 220 | 800 | 4.8 | 5364 |
| 220 | 228 | 830 | 4.8 | 5333 |
| 245 | 228 | 0 | 0 | 4703 |
| 253 | 0 | 0 | 0 | 0 |
| See explanation under Table 1 above. | | | | |

C) Comparison with Example 4 of US20110230581

The results of above Examples 1 and 2 have been compared with the results of Example 4 of US20110230581. The relevant parameters are summarized in Table 3 below.

Table 3

| | Ex. 1 - Polyol B (invention) | Ex. 2 - Polyol C (invention) | Ex. 4 US20110230581 |
|---|---|---|---|
| Glycerol addition | No | Yes | Yes |
| Build ratio(1) | 8.1 | 7.4 | 8.1 |
| Proportion of starting polyol(1) (%) | 12.3 | 13.5 | 12.3 |
| Weight ratio EO:PO (in end product) | 74:26 | 75:25 | 76:24 |
| Hydroxyl functionality | 2.8 | 2.8 | 3.0 |
| OH number (mg of KOH/g) | 39.0 | 36.4 | 36.6 |
| Viscosity at 25 °C (mPas) | 902 | 1217 | 1541 |
| Viscosity at 5 °C (mPas) | 3700 | 5400 | - |
| **(1)** Build ratio = ratio of weight of final product to weight of starting polyol; Proportion of starting polyol = [1/build ratio] *100% | | | |

Advantageously, the viscosity (at 25 °C) of Polyols B and C (invention) were surprisingly substantially lower (902 mPas and 1217 mPas, respectively), when compared to that of the polyol prepared in Example 4 of US20110230581 (1541 mPas).

D) Preparing polyurethane foams

Advantageously, in the below-described polyurethane foam experiments, it is shown that the polyols obtainable by the process of the present invention can be applied successfully in a wide range of polyurethane foam applications, including: 1) pneumatic viscoelastic foams; 2) soft foams; 3) super soft foams; and 4) as cell opener in molded foams.

This will be described in more detail in the following sections, wherein Polyol C as prepared in Example 2 above was used. The materials (polyols, polyisocyanates and other components) used in the polyurethane foam experiments are described in Table 4 below.

Table 4

| | POLYOLS |
|---|---|
| Caradol SA34-05 | Polyether polyol commercially available from Shell Chemicals; MW = 4,700 g/mole; OH number = 34.0 mg KOH/g |
| Caradol SA36-02 | Polyether polyol commercially available from Shell Chemicals; MW = 4,600 g/mole; OH number = 36.0 mg KOH/g; EO content >60% |
| Caradol SA250-06 | Polyether polyol commercially available from Shell Chemicals; MW = 675 g/mole; OH number = 250.0 mg KOH/g |
| Caradol SC48-08 | Polyether polyol commercially available from Shell Chemicals; MW = 3,500 g/mole; OH number = 48.0 mg KOH/g; EO content <15% |
| Caradol SC56-16S | Polyether polyol commercially available from Shell Chemicals; MW = 3,000 g/mole; OH number = 56.0 mg KOH/g |
| Caradol MD22-40 | Styrene-acrylonitrile polymer polyether polyol commercially available from Shell Chemicals; OH number = 22.0 mg KOH/g |
| | POLYISOCYANATES |
| Desmodur 3133 | Polymeric MDI commercially available from Covestro; free NCO content = 32% |
| Suprasec 2721 | Prepolymerized MDI commercially available from Huntsman; free NCO content = 29.8% |
| TDI-80 | 80:20 (by weight) blend of 2,4- and 2,6-isomers of TDI commercially available from Mitsui; free NCO content = 48.3% |

(continued)

| | OTHER COMPONENTS |
|---|---|
| Dabco 33LV | 33 wt.% solution of triethylene diamine in dipropylene glycol, commercially available from Air Products and Chemicals |
| Dabco T-9 | Stannous octoate catalyst, commercially available from Air Products and Chemicals |
| DeoA | Di-ethanol amine (98%; crosslinker) |
| Niax A33, A1, C225 | Amine based catalysts available from Momentive Performance Materials |
| Niax L3627, L618, L417, L627, L580 | Silicone based surfactants commercially available from Momentive Performance Materials |
| Tegostab B4900, BF2370 | Silicone based surfactant commercially available from Evonik |
| MDI = methylene diphenyl diisocyanate;<br>TDI = toluene diisocyanate | |

One or more of the following properties of the foams thus obtained were measured:

1) Force-to-crush (FTC): The foam must be handled in such a way that it is not disturbed/deformed at all, thus all closed cells in the foam should be intact at the start of the test. At 55 seconds after demolding, the foam is placed underneath an indentor foot, so that the centre of the indentor foot is perpendicular to the foam, exactly above the centre point of the molded foam. At 60 seconds after demolding, compressing the foam by the indentor foot is started. When the foam has been indented by 75% of its original height, the indentor reverses direction. The highest measured force during the compression cycle is taken as the FTC value.
2) Density according to ASTM D3574 (sample size 100*100*50 $mm^3$, 2 samples/foam).
3) Resilience according to ASTM D3574 - Test H (sample size 100*100*50 $mm^3$, 2 samples/foam), which involves dropping a 16 mm diameter steel ball bearing onto a sample and measuring the percentage height that the ball bearing rebounded.
4) Hardness Compression Load Deflection at 40% compression (CLD40%) according to DIN 53577 (sample size 100*100*50 $mm^3$, 2 samples/foam), which involves measuring the force required to compress a sample by 40 %.
5) Hardness Indention Load Deflection at 25%, 40% or 65% compression (ILD25%, ILD40% or ILD65%) according to DIN 53577 (sample size 380*320*50 $mm^3$, 1 sample/foam), which involves measuring the force required to compress a sample by 25%, 40% or 65%. In the present Examples, said sample size was changed into 325*375*75 $mm^3$.
6) Sag factor was determined by dividing ILD65% by ILD25%.
7) Porosity was determined using an "IDM" foam porosity tester (ASTM D3574 - Test G), in which a 50*50*25 $mm^3$ foam sample is placed in a vacuum chamber cavity and a specified automatic constant differential air pressure (125 Pa) is applied. The readings of air volume are recorded in litres/min.
8) Recovery time was determined using ASTM D3574 - Test M with 100*100*50 $mm^3$ foam samples (smaller than that mentioned in the test method). Recovery time to 2 N or recovery time to 4.5 N (as in test method) was measured.

D.1) Viscoelastic foams

D.1.1) MDI based pneumatic molded viscoelastic foam

The non-isocyanate components shown in Table 5 below were taken into a beaker and the mixture was stirred for 40 seconds. Then the isocyanate (MDI) component was added and the mixture was stirred for 5-10 seconds and then poured into an aluminum mold which was preheated at 50 °C. The mold was opened after 8-10 minutes and the resulting foam was cured for 24 hours before cutting. The foam was further conditioned at 23°C for at least 18 hours before testing.

Table 5

| | Invention | Comparison |
|---|---|---|
| Formulation | | |
| Caradol SC48-08 (pbw) | 20 | 20 |
| Caradol SA36-02 (pbw) | 0 | 80 |

(continued)

| | Invention | Comparison |
|---|---|---|
| Formulation | | |
| Polyol C (pbw) | 80 | 0 |
| Water (pphp) | 3.6 | 3.6 |
| Niax C225 (pphp) | 0.28 | 0.28 |
| Niax L618 (pphp) | 0.32 | 0.32 |
| Niax L417 (pphp) | 1.5 | 1.5 |
| Desmodur 3133 (index) | 75 | 75 |
| Properties | | |
| Density ($kg/m^3$) | 41 | 41 |
| ILD25% (N) | 36.0 | 36.4 |
| ILD40% (N) | 46.6 | 46.9 |
| ILD65% (N) | 75.0 | 74.6 |
| Sag factor | 2.1 | 2.1 |
| Recovery time to 2 N (s) | 10 | 9 |
| pbw = parts by weight<br>pphp = parts per 100 parts of polyol (by weight)<br>index = isocyanate index | | |

In both experiments, stable pneumatic molded viscoelastic foams with comparable properties were formed. This is surprising since in said experiments different polyols were used: Caradol SA36-02 (comparison) versus Polyol C (invention). A good foam stability was obtained with both said polyols. Such good foam stability was evidenced by observing that no shrinkage, no collapse and no sink back of the foams had occurred.

D.1.2) TDI based viscoelastic foam

The non-isocyanate components shown in Table 6 below were taken into a beaker and the mixture was stirred for 40 seconds. Then the isocyanate (TDI) component was added and the mixture was stirred for 5-10 seconds and then poured into a cardboard box. The resulting foam was cured for 24 hours before cutting. The foam was further conditioned at 23°C for at least 18 hours before testing.

Table 6

| | Comparison | | | Invention | | |
|---|---|---|---|---|---|---|
| | 1 | 2 | 3 | 4 | 5 | 6 |
| Formulation | | | | | | |
| Caradol SC56-16S (pbw) | 18 | 15 | 12 | 18 | 15 | 12 |
| Caradol SA36-02 (pbw) | 2 | 5 | 8 | 0 | 0 | 0 |
| Polyol C (pbw) | 0 | 0 | 0 | 2 | 5 | 8 |
| Caradol SA250-06 (pbw) | 80 | 80 | 80 | 80 | 80 | 80 |
| Water (pphp) | 1 | 1 | 1 | 1 | 1 | 1 |
| Niax A1 (pphp) | 0.25 | 0.25 | 0.25 | 0.25 | 0.25 | 0.25 |
| Dabco 33LV (pphp) | 0.75 | 0.75 | 0.75 | 0.75 | 0.75 | 0.75 |
| Dabco T-9 (pphp) | 0.03 | 0.03 | 0.03 | 0.03 | 0.03 | 0.03 |
| Niax L627 (pphp) | 1.1 | 1.1 | 1.1 | 1.1 | 1.1 | 1.1 |

(continued)

| | Comparison | | | Invention | | |
|---|---|---|---|---|---|---|
| | 1 | 2 | 3 | 4 | 5 | 6 |
| Formulation | | | | | | |
| TDI-80 (index) | 87 | 87 | 87 | 87 | 87 | 87 |
| Properties | | | | | | |
| Density (kg/m$^3$) | 68 | 67 | 66 | 68 | 68 | 67 |
| Porosity (l/min) | 8 | 14 | 28 | 8 | 15 | 27 |
| CLD40% (kPa) | 1.7 | 1.8 | 1.6 | 1.9 | 1.9 | 1.6 |
| Resilience (%) | 4 | 4 | 5 | 3 | 5 | 6 |
| Recovery time to 4.5 N (s) | 12 | 9 | 6 | 9 | 6 | 6 |

In both sets of experiments 1-3 and 4-6 (experiments 1 and 4 can be compared; experiments 2 and 5 can be compared; experiments 3 and 6 can be compared), viscoelastic foams with comparable properties were formed. This is surprising since in said experiments different polyols were used: Caradol SA36-02 (comparison) versus Polyol C (invention). For example, both said polyols gave a comparable cell opening efficiency (as indicated by similar porosity) and a similar recovery time.

Further, in the sets of experiments 4-6 (invention), it can be seen that the use of an increasing amount of Polyol C advantageously leads to an increase in foam porosity.

D.2) Soft foams

The non-isocyanate components shown in Table 7 below were mixed in a high speed mixer at about 2,000 rpm for 40 seconds. Then the isocyanate (TDI) component was added and the mixture was stirred for 7 seconds and then poured to form a foam. Once the foaming process was over, about 12 minutes after pouring, the foam was kept in an oven at 70 °C for about 6 minutes. Subsequently the foam was removed from the oven and cured. After about 24 hours, the foam was sliced as per the requirements and its physical properties were measured.

Table 7

| | Invention | Comparison |
|---|---|---|
| Formulation | | |
| Caradol SC48-08 (pbw) | 90 | 90 |
| Caradol SA36-02 (pbw) | 0 | 10 |
| Polyol C (pbw) | 10 | 0 |
| Water (pphp) | 3.1 | 3.1 |
| Niax A33 (pphp) | 0.1 | 0.1 |
| Tegostab B4900 (pphp) | 1 | 1 |
| Niax A1 (pphp) | 0.05 | 0.05 |
| Dabco T-9 (pphp) | 0.25 | 0.25 |
| TDI-80 (index) | 100 | 100 |
| Properties | | |
| Density (kg/m$^3$) | 28.9 | 28.6 |
| Porosity (l/min) | 102 | 98 |
| CLD40% (kPa) | 2.57 | 2.54 |
| Resilience (%) | 48 | 46 |

As can be seen from Table 7 above, the foam produced in accordance with the present invention has a low hardness characteristic. Generally, when the CLD value for a foam is in the range of 1.5 to 2.7, it is categorized as a soft foam.

In both experiments, soft foams with comparable properties were formed. This is surprising since in said experiments different polyols were used: Caradol SA36-02 (comparison) versus Polyol C (invention).

D.3) Super soft foams

The non-isocyanate components shown in Tables 8 and 9 below were mixed in a high speed mixer at about 2,000 rpm for 40 seconds. Then the isocyanate (TDI) component was added and the mixture was stirred for 7 seconds and then poured to form a foam. Once the foaming process was over, about 12 minutes after pouring, the foam was kept in an oven at 70 °C for about 6 minutes. Subsequently the foam was removed from the oven and cured. After about 24 hours, the foam was sliced as per the requirements and its physical properties were measured.

Table 8

| | Invention | Comparison |
|---|---|---|
| Formulation | | |
| Caradol SC48-08 (pbw) | 40 | 25 |
| Caradol SA36-02 (pbw) | 0 | 75 |
| Polyol C (pbw) | 60 | 0 |
| Water (pphp) | 4.5 | 4.5 |
| Niax A33 (pphp) | 0.1 | 0.1 |
| Tegostab BF2370 (pphp) | 1.2 | 1.2 |
| Dabco T-9 (pphp) | 0.05 | 0.05 |
| Niax A1 | 0.1 | 0.1 |
| TDI-80 (index) | 96 | 96 |
| Properties | | |
| Density ($kg/m^3$) | 22.8 | 21.3 |
| CLD40% (kPa) | 0.71 | 0.63 |

As can be seen from Table 8 above, the foam produced in accordance with the present invention has a very low hardness characteristic. Generally, when the CLD value for a foam is less than 1.5, it is categorized as a super soft foam (or hypersoft foam).

In both experiments, super soft foams with comparable properties were formed. This is surprising since in said experiments different polyols were used: Caradol SA36-02 (comparison) versus Polyol C (invention).

Further, advantageously, when using a polyol as obtained by the polyol preparation process of the present invention (like said Polyol C), only a relatively small amount (here: 60 pbw) of such polyol has to be used in order to make a super soft foam, as compared to the higher amount (here: 75 pbw) of Caradol SA36-02 used in the comparative example to make a super soft foam with the same softness. This is advantageous since polyether polyols are relatively expensive, especially polyether polyols which have a high EO content (like said Polyol C and Caradol SA36-02). Therefore, as explained above, it is desired that a relatively low amount of such polyether polyol may be used to make a foam. Such expensive polyol may then advantageously (partially) be replaced by a cheaper polyether polyol, for example a polyether polyol which has a lower EO content (like said Caradol SC48-08).

Further, when compared with the foam produced in Example 18 of US20110230581, it appears that the above foam produced in accordance with the present invention advantageously has a superior softness. This is apparent from the lower CLD40% which is only 0.71 kPa, whereas the compressive strength for the foam produced in Example 18 of US20110230581 was 1.3 kPa. Said 2 foams were produced in a similar way except that in Example 18 of US20110230581 75 pbw of a polyol prepared in accordance with Example 4 of US20110230581 was used, instead of 60 pbw of Polyol C as in the example in accordance with the present invention. This is an advantage because polyether polyols having a high EO content (like said 2 polyols; see Table 3 above) are generally relatively expensive.

Table 9

| | Inv. | Inv. | Comp. | Inv. | Comp. | Inv. |
|---|---|---|---|---|---|---|
| | 1 | 2 | 3 | 4 | 5 | 6 |
| Formulation | | | | | | |
| Caradol SC48-08 (pbw) | 40 | 35 | 35 | 40 | 40 | 35 |
| Caradol SA36-02 (pbw) | 0 | 0 | 65 | 0 | 60 | 0 |
| Polyol C (pbw) | 60 | 65 | 0 | 60 | 0 | 65 |
| Water (pphp) | 2.45 | 2.45 | 2.45 | 2.45 | 2.45 | 2.45 |
| Niax A33 (pphp) | 0.4 | 0.4 | 0.4 | 0.4 | 0.4 | 0.4 |
| Niax L580 (pphp) | 1 | 1 | 1 | 1 | 1 | 1 |
| TDI-80 (index) | 105 | 105 | 105 | 110 | 110 | 110 |
| Properties | | | | | | |
| Density (kg/m$^3$) | 35.4 | 34.7 | - | 34.8 | - | 34.8 |
| CLD40% (kPa) | 0.61 | 0.79 | - | 0.71 | - | 0.92 |
| Resilience (%) | 46 | 50 | - | 45 | - | 45 |
| Inv. = Invention; Comp. = Comparison | | | | | | |

The experiments in Table 9 above differ from those in Table 8 in that the former were performed at a higher isocyanate index: experiments 1-3 (index = 105) and experiments 4-6 (index = 110). In the Table 8 experiments, the isocyanate index was 96.

In both said sets of experiments from Table 9, it has appeared that it was not possible to measure physical properties on foams prepared using Caradol SA36-02 (comparison), whereas this was possible when using Polyol C (invention). In comparison experiments 3 and 5 using Caradol SA36-02, the foam had an irregular cell structure with a wide cell size distribution.

D.4) Evaluation as cell opener in molded foam formulation

The components mentioned in Table 10 below were conditioned to about 21 °C. Then the non-isocyanate components shown in Table 10 were mixed in a high speed mixer. Further, a mold release agent (RCTA1211 commercially available from Chem Trend) was applied to a mold having a size of 32*38*7.5 cm and preheated to about 50 °C. Then the isocyanate (MDI) component was added and the resulting mixture was then poured into the mold. Six minutes after pouring, demolding took place. The resultant foam was then subjected to a force-to-crush (FTC) measurement 60 seconds after demolding. Further, the foam specimens were left to cure at room temperature for at least 24 hours before cutting, after which they were further analyzed.

Table 10

| | Invention | Comparison |
|---|---|---|
| Formulation | | |
| Caradol SA34-05 (pbw) | 87.8 | 87.8 |
| Caradol MD22-40 (pbw) | 4.6 | 4.6 |
| Caradol SA36-02 (pbw) | 0 | 2.3 |
| Polyol C (pbw) | 2.3 | 0 |
| Water (pbw) | 3.5 | 3.5 |
| Niax A33 (pbw) | 0.2 | 0.2 |
| Niax L3627 (pbw) | 0.7 | 0.7 |
| Niax C225 (pbw) | 0.4 | 0.4 |
| DeoA (pbw) | 0.5 | 0.5 |

(continued)

| | Invention | Comparison |
|---|---|---|
| Formulation | | |
| Suprasec 2721 (index) | 66.5 | 66.5 |
| Properties | | |
| FTC (N) | 2145 | 2220 |
| ILD40% (N) | 385 | 379 |
| Density (kg/m$^3$) | 45.9 | 45.9 |
| CLD40% (kPa) | 7.5 | 7.4 |
| Resilience (%) | 49 | 49 |

An important property of a cell opener is to increase the openness of the foam which effects the foam's dimensional stability. In particular, a cell opener results in reduction of the FTC value. As can be seen from Table 10 above, the FTC value for the foam produced in accordance with the present invention is advantageously reduced, as compared to the foam produced in the comparison experiment.

## Claims

**1.** Process for preparing a polyether polyol comprising:

continuously feeding into a reactor which contains a composite metal cyanide complex catalyst and (i) a poly(oxyalkylene) polyol or (ii) a polyether polyol obtainable by the process according to the invention:

(a) ethylene oxide,
(b) a substituted alkylene oxide corresponding to Formula (I)

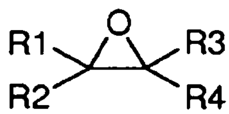

(I)

in which R1, R2, R3 and R4 independently of each other represent hydrogen, a $C_1$-$C_{12}$-alkyl group and/or a phenyl group, provided that:

(I) at least one of the radicals R1 to R4 does not represent hydrogen and
(II) one or more methylene groups in any $C_1$-$C_{12}$-alkyl radical may be replaced by an oxygen atom or a sulfur atom,

(c) optionally a starter compound having a hydroxyl functionality of from 1 to 8,

wherein the weight ratio of the total amount of ethylene oxide fed to the total amount of the substituted alkylene oxide fed is of from 50:50 to 95:5, and
wherein the ethylene oxide concentration is below 12,000 parts per million by weight (ppmw) per minute during the entire period of continuously feeding ethylene oxide, wherein the ethylene oxide concentration is defined as the weight of ethylene oxide in the reactor based on the total weight of the reactor contents, and said ethylene oxide concentration is a time-averaged concentration, C2, calculated for a time period T, starting at t0 and ending at t1, and C2 is calculated as follows:

C2 expressed in ppmw/minute = C1 / number of minutes in time period T,

wherein

C1 expressed in ppmw = [total weight of ethylene oxide fed during time period T / total weight of the reactor contents at t0] * 1,000,000,

wherein during said time period T, both the ethylene oxide feed rate and the ratio of the ethylene oxide feed rate to the substituted alkylene oxide feed rate are constant, and
wherein the reactor contains said catalyst and said polyol before start of said continuous feed into the reactor and the catalyst is not fed continuously into the reactor.

**2.** Process according to claim 1, wherein the ethylene oxide concentration is below 11,000 ppmw per minute, more preferably below 10,000 ppmw per minute, more preferably below 9,000 ppmw per minute, more preferably below 8,500 ppmw per minute, more preferably below 8,000 ppmw per minute, more preferably below 7,500 ppmw per minute, more preferably below 7,000 ppmw per minute, more preferably below 6,500 ppmw per minute, most preferably below 6,000 ppmw per minute.

**3.** Process according to claim 1 or 2, wherein the proportion of the weight of the (i) poly(oxyalkylene) polyol or (ii) polyether polyol obtainable by the process according to the invention, on the basis of the total weight of final product in the reactor, is of from 1 to 80 wt.%, or 3 to 70 wt.%, or 5 to 60 wt.%, or 7 to 50 wt.%, or 8 to 40 wt.%.

**4.** Process according to any one of the preceding claims, wherein the substituted alkylene oxide is selected from the group consisting of propylene oxide, 1,2-butylene oxide, 2,3-butylene oxide and styrene oxide, preferably wherein the substituted alkylene oxide is propylene oxide.

**5.** Process according to any one of the preceding claims, wherein the ratio of the ethylene oxide feed rate to the substituted alkylene oxide feed rate is increased during at least a part of the continuous feed, preferably during an initial part of the continuous feed.

**6.** Process according to any one of the preceding claims, wherein the weight ratio of the total amount of ethylene oxide fed to the total amount of the substituted alkylene oxide fed is of from 55:45 to 90:10, preferably of from 60:40 to 85:15, most preferably of from 70:30 to 80:20.

**7.** Process for preparing a polyurethane foam comprising:

preparing a polyether polyol in accordance with the process according to any one of claims 1-6, and
reacting the polyether polyol and a polyisocyanate in the presence of a blowing agent.

**Patentansprüche**

**1.** Prozess zum Herstellen eines Polyetherpolyols, umfassend

kontinuierliches Einspeisen in einen Reaktor, der einen Verbundmetallcyanid-Komplexkatalysator und (i) ein Poly(oxyalkylen)polyol oder (ii) ein Polyetherpolyol, das durch den Prozess gemäß der Erfindung erhältlich ist, enthält:

(a) eines Ethylenoxids,
(b) eines substituierten Alkylenoxids entsprechend Formel (I)

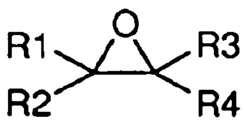

(I)

wobei R1, R2, R3 und R4 unabhängig voneinander Wasserstoff, eine $C_1$-$C_{12}$-Alkylgruppe und/oder eine Phenylgruppe darstellen, mit der Maßgabe:

(I) mindestens einer der Reste R1 bis R4 stellt nicht Wasserstoff dar und
(II) eine oder mehrere Methylengruppen in jedem $C_1$-$C_{12}$-Alkylrest können durch ein Sauerstoffatom oder ein Schwefelatom ersetzt werden,

(c) gegebenenfalls einer Starterverbindung aufweisend eine Hydroxylfunktionalität von 1 bis 8,

wobei das Gewichtsverhältnis der Gesamtmenge an zugeführtem Ethylenoxid zur Gesamtmenge des zugeführten substituierten Alkylenoxids von 50:50 bis 95:5 beträgt, und
wobei die Ethylenoxid-Konzentration während der gesamten Zeitspanne der kontinuierlichen Zuführung von Ethylenoxid unter 12.000 Gewichtsteilen pro Million (ppmw) pro Minute liegt, wobei die Ethylenoxid-Konzentration als das Gewicht von Ethylenoxid im Reaktor basierend auf dem Gesamtgewicht des Reaktorinhalts definiert ist, und wobei die Ethylenoxid-Konzentration eine zeitgemittelte Konzentration C2 ist, die für eine Zeitspanne T berechnet wird, die bei t0 beginnt und bei t1 endet, und C2 wie folgt berechnet wird:

C2 ausgedrückt in ppmw/Minute = C1 / Anzahl der Minuten in Zeitspanne T,

wobei

C1 ausgedrückt in ppmw = [Gesamtgewicht des während der Zeitspanne T zugeführten Ethylenoxids / Gesamtgewicht des Reaktorinhalts bei t0] * 1.000.000,

wobei während der genannten Zeitspanne T sowohl die Ethylenoxid-Zufuhrrate als auch das Verhältnis der Ethylenoxid-Zufuhrrate zu der substituierten Alkylenoxid-Zufuhrrate konstant sind, und
wobei der Reaktor den Katalysator und das Polyol vor Beginn der kontinuierlichen Zuführung in den Reaktor enthält und der Katalysator nicht kontinuierlich in den Reaktor zugeführt wird.

**2.** Prozess nach Anspruch 1, wobei die Ethylenoxid-Konzentration unter 11.000 ppmw pro Minute liegt, mehr bevorzugt unter 10.000 ppmw pro Minute, mehr bevorzugt unter 9.000 ppmw pro Minute, mehr bevorzugt unter 8.500 ppmw pro Minute, mehr bevorzugt unter 8.000 ppmw pro Minute, mehr bevorzugt unter 7.500 ppmw pro Minute, mehr bevorzugt unter 7.000 ppmw pro Minute, mehr bevorzugt unter 6.500 ppmw pro Minute, am meisten bevorzugt unter 6.000 ppmw pro Minute.

**3.** Prozess nach Anspruch 1 oder 2, wobei der Anteil des Gewichts des (i) Poly(oxyalkylen)polyols oder (ii) Polyetherpolyols, erhältlich durch den Prozess nach der Erfindung, bezogen auf das Gesamtgewicht des Endprodukts im Reaktor, von 1 bis 80 Gew.-%, oder 3 bis 70 Gew.-%, oder 5 bis 60 Gew.-%, oder 7 bis 50 Gew.-%, oder 8 bis 40 Gew.-% beträgt.

**4.** Prozess nach einem der vorstehenden Ansprüche, wobei das substituierte Alkylenoxid ausgewählt ist aus der Gruppe bestehend aus Propylenoxid, 1,2-Butylenoxid, 2,3-Butylenoxid und Styroloxid, vorzugsweise wobei das substituierte Alkylenoxid Propylenoxid ist.

**5.** Prozess nach einem der vorstehenden Ansprüche, wobei das Verhältnis der Ethylenoxid-Zufuhrrate zu der substituierten Alkylenoxid-Zufuhrrate während mindestens eines Teils der kontinuierlichen Zufuhr erhöht wird, vorzugsweise während eines anfänglichen Teils der kontinuierlichen Zufuhr.

**6.** Prozess nach einem der vorstehenden Ansprüche, wobei das Gewichtsverhältnis der Gesamtmenge an zugeführtem Ethylenoxid zur Gesamtmenge des zugeführten substituierten Alkylenoxids von 55:45 bis 90:10, vorzugsweise von 60:40 bis 85:15, am meisten bevorzugt von 70:30 bis 80:20 beträgt.

**7.** Prozess zum Herstellen eines Polyuretanschaums, umfassend:

Herstellen eines Polyetherpolyols gemäß dem Prozess nach einem der Ansprüche 1 bis 6, und
Umsetzen des Polyetherpolyols und eines Polyisocyanats in Gegenwart eines Treibmittels.

## Revendications

**1.** Procédé de préparation d'un polyol de polyéther comprenant :

l'alimentation en continu d'un réacteur qui contient un catalyseur complexe de cyanure métallique composite et (i) un polyol de poly(oxyalkylène) ou (ii) un polyol de polyéther susceptible d'être obtenu par le procédé selon

l'invention avec :

(a) de l'oxyde d'éthylène,
(b) un oxyde d'alkylène substitué répondant à la Formule (I)

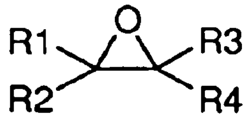

(I)

R1, R2, R3 et R4 représentant indépendamment les uns des autres l'hydrogène, un groupe alkyle en $C_1$-$C_{12}$ et/ou un groupe phényle, sous réserve que :

(I) au moins l'un des radicaux R1 à R4 ne représente pas l'hydrogène, et
(II)un ou plusieurs groupes méthylène dans l'un quelconque radical alkyle en $C_1$ à $C_{12}$ puissent être remplacés par un atome d'oxygène ou un atome de soufre,

(C) éventuellement, un composé de départ ayant une fonctionnalité hydroxyle de 1 à 8,

dans lequel le rapport pondéral de la quantité totale d'oxyde d'éthylène alimenté à la quantité totale de l'oxyde d'alkylène substitué alimenté est de 50:50 à 95:5, et
dans lequel la concentration en oxyde d'éthylène est inférieure à 12 000 parties par million en poids (ppm en poids) par minute pendant toute la période d'alimentation continue d'oxyde d'éthylène, dans lequel la concentration en oxyde d'éthylène est définie comme le poids d'oxyde d'éthylène dans le réacteur sur la base du poids total du contenu du réacteur, et ladite concentration en oxyde d'éthylène est une concentration moyennée dans le temps, C2,
calculé pour une période de temps T, commençant à t0 et se terminant à t1, et C2 est calculé comme suit :

C2 exprimée en ppm en poids/minute = C1/nombre de minutes dans le laps de temps T,

dans lequel

C1 exprimée en ppm en poids = [poids total d'oxyde d'éthylène alimenté pendant le laps de temps T / poids total du contenu du réacteur à t0] * 1 000 000,

dans lequel, pendant ledit laps de temps T, le débit d'alimentation en oxyde d'éthylène et le rapport du débit d'alimentation en oxyde d'éthylène au taux d'alimentation en oxyde d'alkylène substitué sont constants, et dans lequel le réacteur contient ledit catalyseur et ledit polyol avant le début de ladite alimentation continue dans le réacteur et le catalyseur n'est pas introduit de façon continue dans le réacteur.

**2.** Procédé selon la revendication 1, dans lequel la concentration en oxyde d'éthylène est inférieure à 11 000 ppm en poids par minute, plus préférablement inférieure à 10 000 ppm en poids par minute, plus préférablement inférieure à 9 000 ppm en poids par minute, plus préférablement inférieure à 8 500 ppm en poids par minute, plus préférablement inférieure à 8 000 ppm en poids par minute, plus préférablement au-dessous de 7 500 ppm en poids par minute, plus préférablement au-dessous de 7 000 ppm en poids par minute, plus préférablement au-dessous de 6 500 ppm en poids par minute, le plus préférablement au-dessous de 6 000 ppm en poids par minute.

**3.** Procédé selon la revendication 1 ou 2, dans lequel la proportion du poids du (i) polyol de poly(oxyalkylène) ou du (ii) polyol de polyéther pouvant être obtenu par le procédé selon l'invention, sur la base du poids total de produit final dans le réacteur, peut être de 1 à 80 % en poids, ou de 3 à 70 % en poids, ou de 5 à 60 % en poids, ou de 7 à 50 % en poids, ou de 8 à 40 % en poids.

**4.** Procédé selon l'une quelconque des revendications précédentes, dans lequel l'oxyde d'alkylène substitué est choisi dans le groupe constitué par oxyde de propylène, oxyde de 1,2-butylène, oxyde de 2,3-butylène et oxyde de styrène, de préférence dans lequel l'oxyde d'alkylène substitué est l'oxyde de propylène.

**5.** Procédé selon l'une quelconque des revendications précédentes, dans lequel le rapport du débit d'alimentation en

oxyde d'éthylène au débit d'alimentation en oxyde d'alkylène substitué peut être augmenté pendant au moins une partie de l'alimentation continue, de préférence pendant une partie initiale de l'alimentation continue.

**6.** Procédé selon l'une quelconque des revendications précédentes, dans lequel le rapport pondéral de la quantité totale d'oxyde d'éthylène alimenté à la quantité totale de l'oxyde d'alkylène substitué alimenté est de 55:45 à 90:10, de préférence de 60:40 à 85:15, le plus préférablement de 70:30 à 80:20.

**7.** Procédé de préparation d'une composition de mousse de polyuréthane comprenant :

la préparation d'un polyol de polyéther conformément au procédé selon l'une quelconque des revendications 1 à 6, et
la réaction du polyol de polyéther et d'un polyisocyanate en présence d'un agent de gonflement.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20110230581 A
- WO 200180994 A
- US 2011023058175 A